(19) **Europäisches Patentamt / European Patent Office / Office européen des brevets**

(11) **EP 2 183 140 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(21) Anmeldenummer: **08761306.3**

(22) Anmeldetag: **23.06.2008**

(51) Int Cl.:
***G08G 1/16*** *(2006.01)*     ***B62D 15/02*** *(2006.01)*

(86) Internationale Anmeldenummer:
**PCT/EP2008/057954**

(87) Internationale Veröffentlichungsnummer:
**WO 2009/015942 (05.02.2009 Gazette 2009/06)**

(54) **VERFAHREN UND VORRICHTUNG ZUM UNTERSTÜTZEN VON AUSPARKVORGÄNGEN VON KRAFTFAHRZEUGEN**

METHOD AND DEVICE FOR SUPPORTING THE PROCESS OF LEAVING A PARKING SPACE OF MOTOR VEHICLES

PROCÉDÉ ET DISPOSITIF DE SOUTIEN DES PROCESSUS DE DÉMARRAGE DE VÉHICULES À MOTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007 DE 102007036251**

(43) Veröffentlichungstag der Anmeldung:
**12.05.2010 Patentblatt 2010/19**

(73) Patentinhaber: **Robert Bosch GmbH**
**70442 Stuttgart (DE)**

(72) Erfinder: **LEHNER, Philipp**
**75417 Muehlacker (DE)**

(56) Entgegenhaltungen:
**EP-A- 1 447 271     DE-A1- 10 331 948**
**DE-A1-102005 061 909**

**Beschreibung**

Stand der Technik

Die Erfindung betrifft ein Verfahren zum Unterstützen von Ausparkvorgängen von Kraftfahrzeugen, wobei Daten unterschiedlicher Bordsensoren für die Ermittlung eines kollisionsfreien Ausparkvorganges genutzt werden. Die Erfindung betrifft auch eine Vorrichtung zum Ausführen eines Verfahrens zum Unterstützen von Ausparkvorgängen von Kraftfahrzeugen, wobei Daten unterschiedlicher Bordsensoren für die Ermittlung eines kollisionsfreien Ausparkvorganges genutzt werden.

Im derzeitigen Automobilmarkt besteht Bedarf an Assistenzsystemen, die einen Fahrer oder einen Führer von Kraftfahrzeugen bei Einparkvorgängen unterstützen. Eine Unterstützung des Fahrers ist zur Vermeidung von Kollisionen wünschenswert. Aus dem Stand der Technik sind auch bereits Verfahren und Vorrichtungen bekannt, die potenzielle Parklücken bei der Vorbeifahrt des Kraftfahrzeuges an ihnen vermessen und anzeigen. Dabei unterstützen diese Verfahren und Vorrichtungen den Führer des Kraftfahrzeuges in Form von Fahr- und Lenkanweisungen und/oder in Form der Übernahme des Lenkens, um das Kraftfahrzeug automatisch in die Parklücke zu führen. Solche Verfahren und Vorrichtungen sind etwa aus der EP 1 270 367 A2 und der DE 19 940 007 A1 bekannt.

Es sind auch Verfahren und Vorrichtungen zum Unterstützen beim Ausparken des Kraftfahrzeuges bekannt. So offenbart die DE 19 933 732 A1 eine Ein-/ und Ausparkhilfe, bei der anhand eines aktuellen Lenkwinkels, also dem Winkel, den die Vorderräder zur Längsrichtung des Kraftfahrzeuges einschlagen, ein zu fahrender Weg ermittelt wird. Dieser Weg wird auch als Fahrschlauch bezeichnet. Aus dieser Druckschrift ist auch bekannt, dass Bordsensoren im Kraftfahrzeug vorhanden sind, die Abstandsmessungen vornehmen. Dabei werden Hindernisse im unmittelbaren Umfeld des Kraftfahrzeuges ermittelt. Die Ein-/Ausparkhilfe führt Berechnungen durch, um im Fahrschlauch befindliche Hindernisse zu identifizieren und festzustellen, dass bei einer nach vorne gerichteten Fahrt mit gleichbleibendem Lenkwinkel eine Kollision droht. Das System der DE 19 933 732 A1 signalisiert dem Führer des Fahrzeuges durch ein Alarmsignal die Gefahrensituation. Ist eine kollisionsfreie Fahrt mit dem eingestellten Lenkwinkel möglich, wird hingegen ein Freisignal generiert. Dem Führer des Kraftfahrzeuges wird somit rückgemeldet, ob der von ihm eingeschlagene Lenkwinkel zum kollisionsfreien Fahren aus der Parklücke ausreichend ist.

Ein Verfahren und ein System zur Unterstützung des Rangierens von Kraftfahrzeugen ist ferner aus der DE 102 004 046 631 A1 bekannt. Hierbei wird auf die Erfassung des aktuellen Lenkwinkels verzichtet. Es wird lediglich eine Abschätzung durchgeführt, ob der maximal einschlagbare Lenkwinkel zu einer Kollision führt oder nicht. Abhängig von dieser Abschätzung wird ein Freisignal generiert.

Ein Verfahren und eine Vorrichtung zum Ausparken eines Fahrzeugs ist auch aus der DE 4 333 112 A1 bekannt. Aus dieser Druckschrift ist bekannt, dass selbst eine Speicherung der beim Einparken ausgemessene Parklücke nicht zielführend ist, da sich die Parklücke während der Parkzeit verändert haben kann. Aus der DE 4 333 112 A1 ist auch bekannt, dass das Fahrzeug beim Ausparken einen gewissen Sicherheitsmindestabstand zu einem Hindernis einhalten muss. Das Aktualisieren/Vervollständigen eines Umgebungsmodells durch Datensignale, die von Sensoren beim Ausparken erhalten werden, wird erwähnt. Die DE 4 333 112 A1 baut jedoch darauf, dass ausschließlich mit den neu erfassten Daten ein Umgebungsmodell generiert wird.

Weiterhin ist aus der DE 103 31948 A1 ein Verfahren und ein System zur Unterstützung des Manövrierens von Fahrzeugen bekannt, bei dem eine Aufnahmeeinheit zum Aufnehmen eines durchzuführenden Manövers, eine Speichereinheit zum Speichern des aufgenommenen Manövers und eine Unterstützungseinheit zur Unterstützung der wiederholten Durchführung des gespeicherten Manövers vorgesehen ist.

Offenbarung der Erfindung

Vorteile der Erfindung

Die Aufgabe wird durch ein Verfahren zum Unterstützen von Ausparkvorgängen von Kraftfahrzeugen gelöst, wobei Daten unterschiedlicher Bordsensoren für die Ermittlung eines kollisionsfreien Ausparkvorganges genutzt werden. Dabei werden folgende Schritte durchlaufen:

a) Ermittlung von Sensordaten beim Einparken zum Modellieren der physikalischen Umgebung des Kraftfahrzeuges,
b) Berechnung von Daten zum Beschreiben der Umgebung,
c) Abspeicherung der Daten,
d) Abrufen der gespeicherten Daten zum Ermitteln der für das Ausparken relevanten physikalischen Umgebung des Kraftfahrzeugs,
e) Überprüfen der gespeicherten Daten auf Plausibilität,
f) Freigeben der Daten und

g) Verwenden der Daten zum Berechnen eines kollisionsfreien Ausparkweges.

Die Aufgabe wird auch durch eine Vorrichtung gelöst, durch die das Verfahren durchführbar ist.

Durch das Ausgestalten eines Verfahrens nach Anspruch 1 oder einer Vorrichtung nach Anspruch 10, kann in kürzerer Zeit ein Ausparkvorgang gestartet werden. Es ist nicht unbedingt notwendig zeit- und ressourcenintensiv über die Bordsensoren die Daten von Abstandsmessungen für die Modellierung eines Umgebungsmodells zu nutzen, bevor der Ausparkvorgang gestartet werden kann. Es ist schneller und ressourcenextensiver möglich einen Fahrschlauch zu ermitteln, der Kollisionen mit Hindernissen vermeidet, wenn auf plausible bereits abgespeicherte Umgebungsdaten zurückgegriffen wird. Durch das Überprüfen der gespeicherten Daten auf Plausibilität wird ein komplexeres Datenmodell nutzbar. Dabei wird sichergestellt, dass nur die Daten genutzt werden, die auf unveränderte Umgebungsbedingungen zurückgehen, oder bei Veränderungen ersetzt wurden. Eine höhere Genauigkeit bei der Ermittlung des zu fahrenden Fahrschlauches für das Ausparken ist dann die Folge.

Durch eine erfindungsgemäße Vorrichtung wird das automatische Durchlaufen des Verfahrens im Kraftfahrzeug möglich, was zu einer Belastungsverminderung des Kraftfahrzeugführers führt.

In den Unteransprüchen werden vorteilhafte Ausführungsformen eines erfindungsgemäßen Verfahrens beansprucht und nachfolgend näher erläutert.

So ist es besonders vorteilhaft, wenn das Überprüfen der gespeicherten Daten auf Plausibilität den Schritt des Prüfens auf Vorliegen von eine seitliche Begrenzung, wie einen Bordstein, beschreibenden Daten umfasst. Liegt im vorliegenden Datensatz, der beim Einparken vor geraumer Zeit erstellt wurde, eine Modellierung einer seitlichen Begrenzung mittels Daten vor, so ist ein Rückgriff auf das ursprüngliche Koordinatensystem als Referenzbasis möglich. Nachfolgende Berechnungen können valide und schnell ausgeführt werden. Wesentlicher Vorteil der Kenntnis der lateralen Begrenzung ist ferner die Möglichkeit, diese beim Ausparken als Hindernis berücksichtigen zu können, da diese von den Bordsensoren eines geparkten Fahrzeugs, aufgrund deren eingeschränkten Sensorbereichs, in der Regel nicht erfasst wird. Auch bei Nicht-Vorhandensein von Daten zur lateralen Begrenzung wird ein Koordinatensystem gewählt, welches als Referenzbasis beim Berechnen des Fahrschlauches dient.

Um eine schnelle Berechnung der Umgebung zu ermöglichen, ist es von Vorteil, wenn bei Fehlen der eine seitliche Begrenzung beschreibenden Daten, für die Weiterberechnung von einer parallelen Ausrichtung des Kraftfahrzeuges mit einem festgelegten Abstand, der vorzugsweise aus 20 cm gesetzt wird, ausgegangen wird. In statistischer Näherung kann eine parallele Ausrichtung des Kraftfahrzeuges mit einem Abstand von 20 cm zum Bordstein als Normalfall ausgegangen werden. Das Heranziehen dieses Normfalls ermöglicht ein schnelleres Berechnen der die Umgebung beschreibenden Daten.

Wenn der Schritt des Prüfens der gespeicherten Daten auf das Erfassen von aktuellen Abstandsdaten über die Bordsensoren zu einem vorderen und/oder hinteren Hindernis beinhaltet und den Vergleich der erfassten Daten mit den jeweiligen gespeicherten Daten beinhaltet, so kann vorteilhafterweise eine genauere Plausibilisierung der Daten durchgeführt werden. Sollte das vordere und/oder hintere Hindernis nicht mehr an der gespeicherten Position sein, so kann das bestehende Umgebungsmodell in Gänze oder in jedem Detail verworfen werden. Ein genaueres Umgebungsmodell kann dann nach kürzerer Zeit erhalten werden.

Es ist von weiterem Vorteil, wenn bei Abweichen der gespeicherten Daten um mehr als einen bestimmten Betrag die die Abmessungen des vorderen und/oder hinteren Hindernisses modellierenden Daten durch Ersatzwerte ersetzt werden, um einer seit dem Einparken veränderten Parklücke Rechnung zu tragen.

Wenn die gespeicherten Daten für das vordere und/oder hintere Hindernis durch die neu erfassten Daten ersetzt werden und/oder die die seitliche Erstreckung des vorderen und/oder hinteren das Hindernis beschreibenden Daten durch vorgegebene Daten ersetzt werden, die vorzugsweise ein Erstrecken des Hindernisses mit der selben Breite wie des ausparkenden Kraftfahrzeuges modellieren so kann auf statistisch gesehen meistens vorliegende Abmessungen von vorderen oder hinteren Hindernissen zurückgegriffen werden, um besonders sicher ohne Kollision das Fahrzeug aus der Parklücke führen zu können.

Wenn ein idealer Lenkwinkel für ein erstmaliges Zurückfahren des Kraftfahrzeuges in der Parklücke ermittelt wird, so dass eine hintere der seitlichen Begrenzung fernen Ecke des Kraftfahrzeuges mit einer ersten gedachten Ebene in Kontakt gerät und ein hinterer Punkt des Kraftfahrzeuges auf der der seitlichen Begrenzung zugewandten Seite des Kraftfahrzeuges gleichzeitig mit einer zweiten gedachten Ebene in Kontakt gerät, wobei die erste gedachte Ebene eine zur seitlichen Begrenzung orthogonale Vertikalebene ist, die um einen Mindestabstand von einem hinteren Hindernis entfernt ist und wobei die zweite Ebene eine zur Seite hin begrenzten Parallele und mit einem lateralen Mindestabstand beabstandete Vertikalebene ist, so kann die Parklücke optimal ausgenutzt werden, um in möglichst wenig Zügen die Parklücke verlassen zu können.

Um Beschädigungen am Kraftfahrzeug zu vermeiden, ist es von Vorteil, wenn eine Unterscheidung stattfindet, ob die seitliche Begrenzung vom Heck des Kraftfahrzeuges ohne Kollision überstreichbar ist. Es ist dabei besonders vorteilhaft zu unterscheiden, ob der hintere Punkt entweder eine hintere Ecke des Kraftfahrzeugs darstellt, die der seitlichen Begrenzung nächstgelegen ist, wenn die Höhe der seitlichen Begrenzung vom Heck des Kraftfahrzeugs nicht ohne dessen Kontaktierung überstreichbar ist, oder ein Punkt auf dem zuerst mit der seitlichen Begrenzung in Kontakt gelangenden Reifen darstellt, wenn die Höhe der seitlichen Begrenzung vom Heck des Kraftfahrzeugs ohne dessen Kontaktierung überstreichbar ist.

Wird ein Kraftfahrzeug im letzten Rangierschritt mit Maximallenkeinschlag aus der Parklücke gefahren, so steht das Fahrzeug in der nachfolgend zu befahrenden Straße besonders quer, im schlimmsten Fall senkrecht. Es ist daher von besonderem Vorteil, wenn ein minimaler Lenkwinkel für den das Kraftfahrzeug aus der Parklücke ohne Kontaktierung des vorderen Hindernisses führenden letzten Rangierschritt berechnet wird.

Es ist auch von besonderem Vorteil, wenn der minimale Lenkwinkel automatisch eingestellt wird und danach die Kontrolle über das Fahrzeug einem Führer des Kraftfahrzeuges wieder zurückgegeben wird. Dadurch werden falsche Lenkwinkel vermieden, was zu einer Unfallverminderung führt.

Wie erläutert ist eine Vorrichtung zum Durchführen des Verfahrens gemäß der Erfindung besonders vorteilhaft, um eine Automatisierung des Ausparkens zu ermöglichen.

Kurze Beschreibung der Zeichnungen

Ein Ausführungsbeispiel wird mit Hilfe einer Zeichnung nachfolgend näher erläutert. Es zeigen:

Figur 1    ein Kraftfahrzeug mit einer Recheneinheit und einer Mensch-Maschine-Schnittstelle in schematischer Ansicht zum Berechnen eines Fahrschlauches für ein Ausparken des Kraftfahrzeuges und Ausgeben von Signalen für einen Führer des Kraftfahrzeuges,

Figur 2    eine schematische Darstellung einer Parklücke zwischen zwei Fahrzeugen und einem eingeparkten Fahrzeug, das erfindungsgemäß ausgeparkt werden soll,

Figur 3    eine schematische Ansicht eines ersten Rückwärtszuges beim Ausparken eines Kraftfahrzeugs,

Figur 4    einen zweiten Ausparkzug, bei dem das Fahrzeug mit nach links eingeschlagenen vorderen Rädern nach vorne gefahren wird,

Figur 5    einen dritten Ausparkzug, bei dem das Fahrzeug mit nach rechts gesteuerten Rädern nach hinten gefahren wird,

Figur 6    einen letzten Ausparkzug zum Herausfahren des Fahrzeuges aus der Parklücke mit nach links eingeschlagenen Rädern,

Figur 7    eine schematische Darstellung eines rechten hinteren Rades, das mit einer seitlichen Begrenzung, wie einem Bordstein, in Kontakt gerät,

Figur 8    eine schematische Darstellung des Kraftfahrzeuges, das gleichzeitig minimal zur hinteren Barriere und zur seitlichen Begrenzung beabstandet ist und

Figur 9    eine schematische Ansicht des sich nach hinten bewegenden Kraftfahrzeugs und dabei auftretenden Kreisbahnen einzelner Punkte des Kraftfahrzeugs.

Ausführungsformen der Erfindung

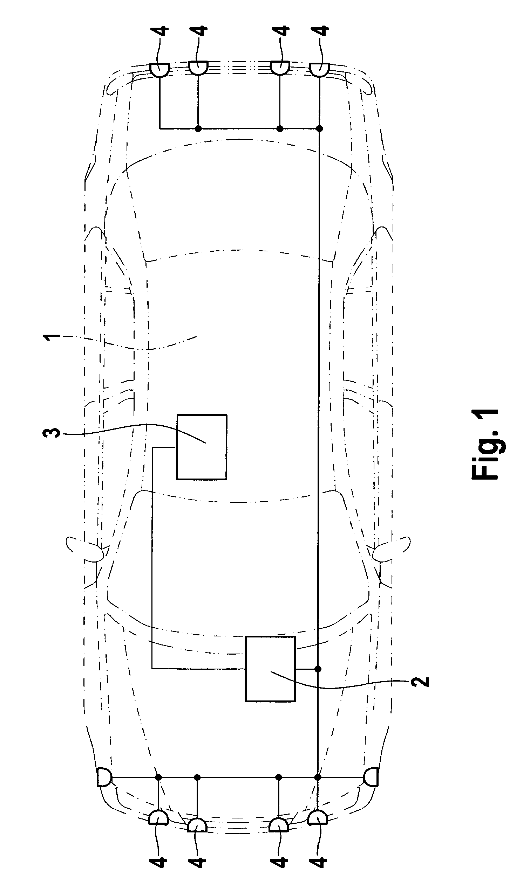

Figur 1 zeigt eine schematische Ansicht eines Kraftfahrzeugs 1, das eine Rechnereinheit 2 aufweist. Im Kraftfahrzeug 1 ist auch eine Mensch-Maschine-Schnittstelle 3 angeordnet und mit der Rechnereinheit 2 verbunden. Die Mensch-Maschine-Schnittstelle 3 wird auch als Human-Machine-Interface bezeichnet. Im Kraftfahrzeug 1 sind des Weiteren Sensoren 4 angebracht. Die Sensoren, die in der Literatur auch als Bordsensoren bezeichnet werden, ermitteln Daten zur Berechnung des Abstandes zu vorderen oder hinteren Hindernissen. Im Regelfall sind die Sensoren 4 im vorderen und/oder hinteren Stoßfänger des Kraftfahrzeugs 1 angeordnet. Im Stand der Technik sind Ultraschallsensoren, Infrarotsensoren oder Radarsensoren diesbezüglich bekannt. Die Sensoren sind mit der zentralen Rechnereinheit 2 (ECU) verbunden, die die Daten sammelt und verarbeitet. In der Rechnereinheit werden vorteilhafterweise außer dem Lenkwinkel, auch Radimpuls-, Geschwindigkeits- und/oder Gierrateninformationen ausgewertet. Über ein Controller Area Network (CAN-Bus) werden die Daten von den Sensoren 4 oder im Kraftfahrzeug enthaltenen Systemeinheiten, wie ESP-Vorrichtungen, zu der Rechnereinheit 2 geleitet.

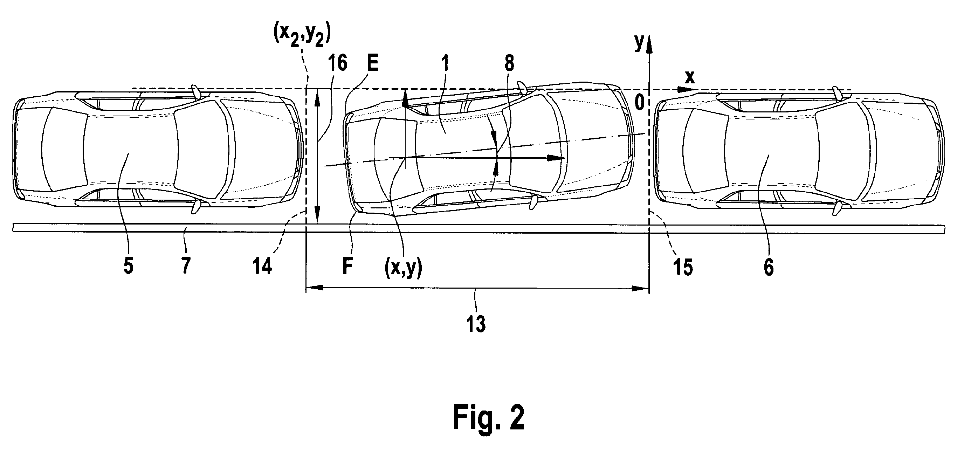

Figur 2 zeigt eine Parklücke zwischen einem hinteren Fahrzeug 5 und einem vorderen Fahrzeug 6. Bei Einparkassistenzsystemen ist das Vermessen der Parklücke während der Vorbeifahrt, wie erläutert, bekannt. Dabei werden Positionen der begrenzenden Ecken, Tiefe und Länge der Parklücke, Position und Ausrichtung einer seitlichen Begrenzung 7, die im vorliegenden Fall ein Bordstein ist, in Bezug auf das eigene Fahrzeug bestimmt. Die seitliche Begrenzung 7 wird auch als laterale Begrenzung bezeichnet. In einem Verfahren gemäß der Erfindung, wird der Ursprung eines ortsfesten kartesischen Koordinatensystems in den Eckpunkt der vorderen Parklückenbegrenzung gelegt.

In Figur 2 ist die Position (x,y) des Kraftfahrzeugs, nämlich der als Bezugspunkt dienende Mittelpunkt der Hinterachse, und die Position $(x_2,y_2)$ der hinteren Ecke bzgl. des Ursprungs angegeben. Die Lage der Parklücke zu dem Fahrzeug wird durch die Lage der seitlichen Begrenzung 7, also dem Bordstein, bestimmt und ist durch einen Winkel ψ gegeben. Der Winkel ψ ist mit dem Referenzeichen 8 in der Figur 2 vermerkt. Am Ende des Einparkvorgangs werden diese Daten, also die eigene Fahrzeugposition und die Position der seitlichen, hinteren und vorderen Begrenzung, gespeichert, um diese beim Ausparkvorgang weiter verwenden zu können. Die Speicherung erfolgt vorteilhafterweise in einem Electrically Erasable Programmable Read-Only Memory (EEPROM).

Eine Vorrichtung zum Durchführen des Verfahrens zum Unterstützen von Ausparkvorgängen von Kraftfahrzeugen, eher in Form eines Ausparkassistenten, wird vom Fahrer aktiviert. Die Aktivierung erfolgt vorteilhafterweise per Knopfdruck.

Zunächst wird geprüft, ob Daten vom vorangegangenen Einparkvorgang vorhanden sind. Ist dies der Fall, wird die Information über die Position und Lage der seitlichen Begrenzung 7 bzgl. des eigenen Fahrzeuges direkt übernommen.

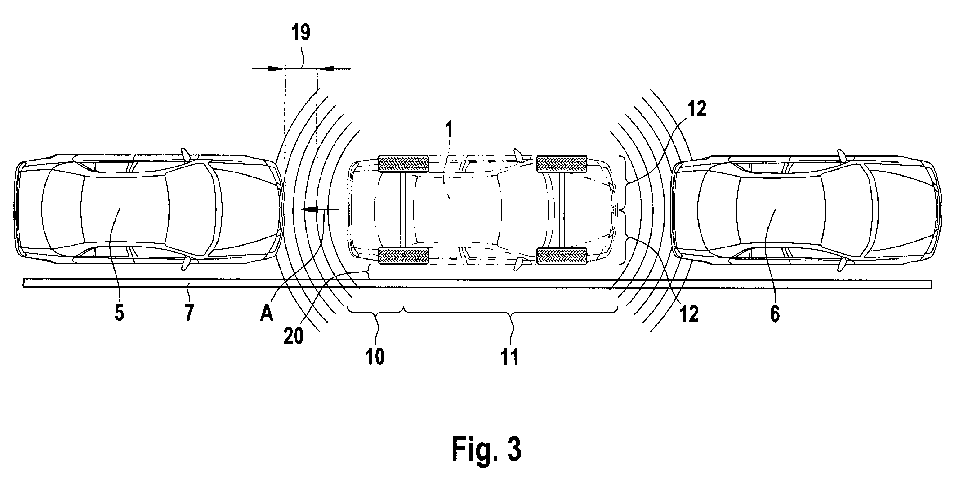

In diesem Prüfschritt wird also eine Unterscheidung getroffen, ob Daten aus dem vorherigen Einparkvorgang vorhanden sind, oder nicht. Sollten keine Daten vorhanden sein, wird zunächst von einer parallelen Ausrichtung des Fahrzeugs zur lateralen / seitlichen Begrenzung 7, normalerweise dem Bordstein, und einem vordefinierten Abstand zur seitlichen Begrenzung 7, ausgegangen. Die parallele Ausrichtung des Fahrzeugs zum Bordstein bedingt einen Winkel ψ von 0°. Eine solche Situation ist in Figur 3 dargestellt. Der vordefinierte Abstand ist mit der Bezugsziffer 20 versehen.

Es wird eine Überprüfung der gespeicherten Daten auf Plausibilität durchgeführt. Dabei wird zunächst geprüft, ob es sich tatsächlich noch um die selben Objekte handelt, wie beim Einparken vorhanden waren, oder ob sich diese Hindernisse und Begrenzungen seit dem Einparkvorgang verschoben haben. Bei einem Überprüfen der vorliegenden Daten auf Plausibilität, wird die Stimmigkeit und/oder die Richtigkeit der gespeicherten Daten mit den zu diesem Zeitpunkt vorliegenden realen Gegebenheiten überprüft. Die bei einem Einparken ermittelten und abgespeicherten Daten werden mit Messungen zum Zeitpunkt des Ausparkens verglichen. In einer Ausführungsform wird dabei ein Toleranzwert berücksichtigt, um den Einfluss etwa von Sensorungenauigkeiten zu Verhindern.

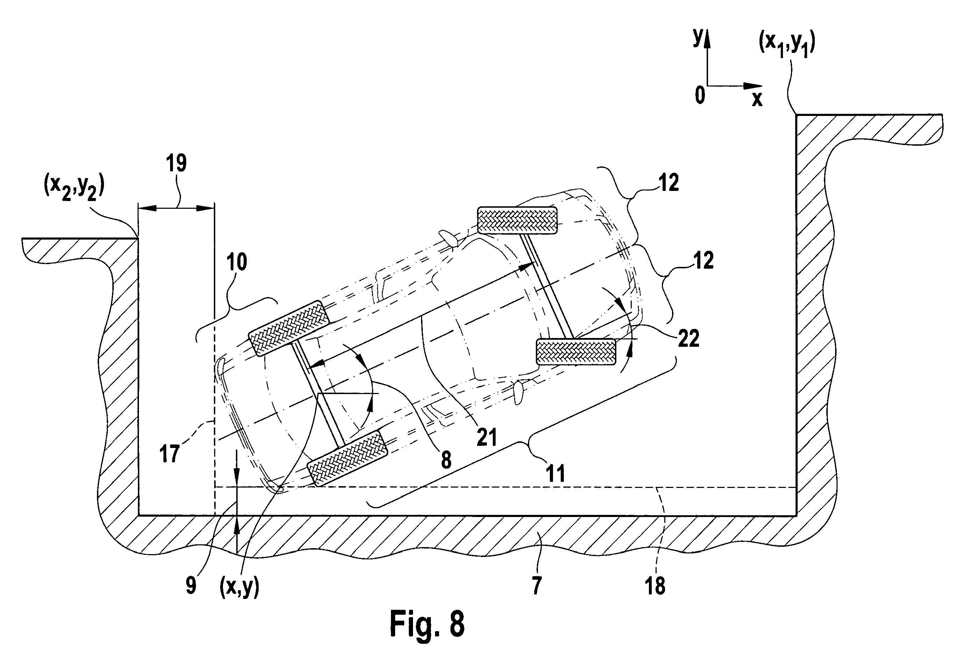

Zur Plausibilitätsprüfung werden die durch die Sensoren 4 erfassten Abstände mit den gespeicherten Daten verglichen. Es kommen dabei folgende Beziehungen zum Einsatz, wobei $d_{Front}$ den von den Sensoren 4 gemessenen Abstand von der Vorderkante des Fahrzeugs zu einem vorderen Hindernis, z.B. dem vorderen Fahrzeug 6 bezeichnet, $d_{Rear}$ den von den Sensoren 4 gemessenen Abstand von der Hinterkante des Kraftfahrzeugs 1 zu einem hinteren Hindernis, also etwa dem hinteren Fahrzeug 5 bezeichnet und $d_{tol}$ eine Abstandstoleranz bezeichnet, die etwaige Messungenauigkeit kompensiert. Für die vordere Begrenzung wird ein Überprüfungsverfahren gemäß $d_{Front} - d_{tol} \leq -x - l_v \sin(\psi) - b_h \cos(\psi) \leq d_{Front} + d_{tol}$ durchgeführt. Für die hintere Begrenzung wird ein Verfahren $d_{Rear} - d_{tol} \leq L + x - l_h \sin(\psi) - b_h \cos(\psi) \leq d_{Rear} + d_{tol}$ durchgeführt. $l_h$ und $l_v$, die mit den Referenzeichen 10 und 11 versehen sind, sind dabei die Abstände zwischen der Hinterachse und dem hinterem Ende des Kraftfahrzeugs 1, bzw. der Hinterachse und dem vorderen Ende des Kraftfahrzeugs 1. Dies ist in den Figuren 3 und 8 dargestellt. Ein explizites Freigeben der auf Stimmigkeit und/oder Richtigkeit geprüften Daten kann auch schon innerhalb des Plausibilisierungsschrittes erfolgen. Insbesondere kann statt einem expliziten Freigeben der Daten auch ein implizites Freigeben erfolgen, das durch einen vorgelagerten Schritt bedingt ist. Es ist nicht notwendig die Daten in einem Speicher explizit als 'freigegeben' zu markieren. Durch die Verwendung der auf Stimmigkeit und/oder Richtigkeit geprüften Daten ist eine Freigabe aber resultierend.

Die halbe Fahrzeugbreite des Kraftfahrzeugs 1 ist mit den Bezugszeichen 12 versehen und geht in die Formel als $b_h$ ein.

In Figur 2 ist eine Parklückenlänge L, mit dem Referenzeichen 13 vermerkt. Diese Parklückenlänge 13 bemisst sich von einer Vertikalebene direkt vor dem Ende des hinteren Fahrzeugs 5, wobei die Vertikalebene mit dem Referenzeichen 14 versehen ist, bis zu einer Vertikalebene 15 direkt vor dem hinteren Ende des vorderen Fahrzeugs 6. Die hinteren beiden Ecken des Kraftfahrzeuges 1 sind mit E und F in Figur 2 gekennzeichnet. Dabei ist die Ecke E die der seitlichen Begrenzung 7 ferne hintere Ecke des Kraftfahrzeugs 1 und die Ecke F die der seitlichen Begrenzung 7 nahe Ecke des Kraftfahrzeugs 1.

Ist die obige Bedingung für die vordere Begrenzung nicht erfüllt, muss davon ausgegangen werden, dass sich dieses Objekt, also ein vorderes Fahrzeug 6, seit dem Einparkvorgang bewegt hat oder es sich um ein ganz anderes Objekt handelt. Da die abstandsmessenden Sensoren 4 in der Regel keine Information über die Ausdehnung der Objekte in y-Richtung liefern können, wird ein vordefiniertes Maß als Breite angenommen und damit die y-Koordinate des Eckpunktes bestimmt. Dabei wird folgende Gleichung verwendet:

$$y_1 = -T + \text{(angenommene Objektbreite)} + \text{(angenommener Abstand zum Bordstein)}.$$

Mit T wird die beim Einparkvorgang gemessene Tiefe der Parklücke bezeichnet, wobei diese Tiefe T der Parklücke mit dem Referenzeichen 16 der Figur 2 vermerkt ist. Alternativ zu vordefinierten Standardwerten für die Objektbreite und den Abstand zum Bordstein kann auch davon ausgegangen werden, dass sich die äußere Ecke des vorderen Objekts, also das vordere Fahrzeug 6, ähnlich weit in y-Richtung erstreckt, als die des eigenen Fahrzeugs. Daraus ergibt sich die y-Koordinate der vorderen Parklückenecke gemäß $y_1 = y + b_h + d$, wobei $d$ ein zusätzlicher Sicherheits-Offset ist.

Ist hingegen bei geeignet gewählter Abstandstoleranz $d_{tol}$, z.B. 10 cm, die Bedingung für die vordere Begrenzung erfüllt, kann diese als plausibel betrachtet und davon ausgegangen werden, dass es sich bei dem vorderen Hindernis um das selbe handelt, wie beim vorangegangenen Einparkvorgang. Die zuvor gespeicherten Daten der vorderen Begrenzung können also verwendet werden und die y-Koordinate der vorderen Ecke ist damit schon bekannt.

Genauso wird auch das hintere Objekt plausibilisiert und, je nach Resultat, wird die y-Koordinate des hinteren Eckpunktes vom Einparkvorgang übernommen oder die y-Koordinate wird mittels vordefinierter Standardwerte oder der eigenen Ausdehnung, wie bereits erläutert, in y-Richtung bestimmt. Es sei darauf hingewiesen, dass nach Plausibilisierung der bereits aus dem Einparkvorgang vorhandenen Daten oder Ersetzen dieser Daten alle zur Beschreibung der Parklücken notwendigen Parameter vorliegen. Allerdings kann der Fall auftreten, dass die vordere der seitlichen Begrenzung 7 fernen Ecke nicht im Koordinatenursprung 0, wie in Figur 2 dargestellt, liegt. Stattdessen kann der Fall auftreten, dass die linke vordere Ecke des vorderen Hindernisses am Koordinatenpunkt $x_1$ und $y_1$, wie in Figur 8 dargestellt, liegt. Trotz allem können die nun plausibilisierten oder generierten Daten für einen kollisionsfreien Ausparkvorgang genutzt werden. Ein diesbezüglicher Fahrschlauch ist nun kalkulierbar.

Erfindungsgemäß beginnt das Ausparkmanöver mit einem Rückwärtszug. Dabei sind alternative Verfahren zum Führen des Kraftfahrzeuges 1 bei diesem ersten Ausparkzug möglich. So ist, wie in Figur 3 dargestellt, ein Rückwärtsfahren, siehe Pfeil A ohne Lenkeinschlag möglich. Der Winkel $\psi$ ist daher 0°. Alternativ ist ein nicht dargestellter Maximallenkeinschlag nach rechts generierbar, im Fall des Parkens eines Kraftfahrzeuges 1 mit dessen rechter Seite an einer seitlichen Begrenzung 7, also nach rechts.

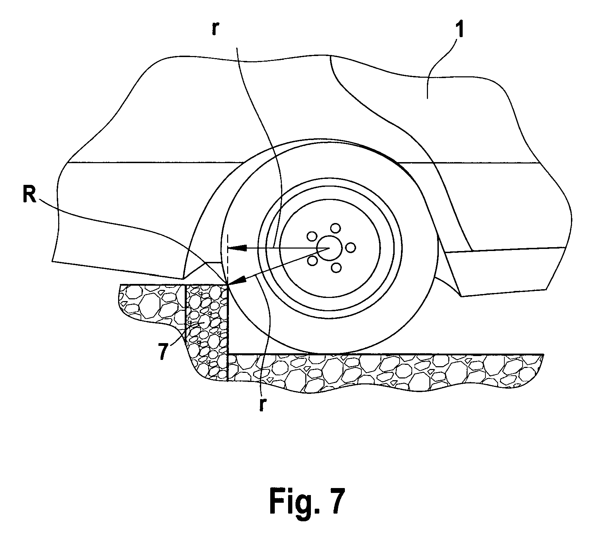

Alternativ zum Volleinschlag oder dem Geradehalten der Vorderräder, ist es besonders vorteilhaft, wenn das Fahrzeug mittels Einschlagens der Vorderräder um einen idealen Lenkradwinkel $LW_{ideal}$ nach hinten geführt wird. Das Einschlagen der Vorderräder mit einem idealen Lenkradwinkel $LW_{ideal}$ führt zu einem in Figur 8 dargestellten gleichzeitigen Kontaktieren der hinteren Ecke E mit einer Hilfsebene 17 und einem Punkt R mit einer Hilfsebene 18. Die Hilfsebene 17 verläuft parallel zu der Vorderkante eines hinteren Hindernisses und orthogonal zur seitlichen Begrenzung 7 in vertikaler Erstreckung und ist von dem hinteren Hindernis um den Betrag $d_{min}$, in Figur 8 mit dem Referenzzeichen 19 bezeichnet, entfernt. Die Hilfsebene 18 verläuft in vertikaler Erstreckung parallel zur seitlichen Begrenzung 7 und ist um den Wert $d_{min,lat}$, in Figur 8 mit dem Bezugszeichen 9 versehen, beabstandet. Der Punkt R, der mit der Hilfsebene 18 in Kontakt gerät, ist in Figur 7 dargestellt. Dies ist der Punkt R, der am hinteren rechten Rad des Fahrzeugs 1 mit einer Kante der seitlichen Begrenzung 7, also der Bordsteinkante in Kontakt gerät.

Der Radius des Rades ist in Figur 7 mit $r$ gekennzeichnet. Der Radius $r_{whrel}$, der für die weitere Berechnung benötigt wird, ist in Figur 7 ebenfalls dargestellt. Wie erläutert ist $r_{wheel}$ der "effektive" Radradius, der, wie in Figur 7 dargestellt, mittels einer üblichen Bordsteinhöhe definiert wird.

Der Wert $d_{min,lat}$ entspricht einem mindestens einzuhaltenden Abstand des Punktes R zur seitlichen Begrenzung. Er ist vorzugsweise geringer zu wählen, als der vordefinierte Abstand 20 in Figur 3 bei Parallelausrichtung des Fahrzeugs, z.B. 5 cm.

In der dargestellten Variante, das das Lenkrad in Geradeausstellung, also bei einem Lenkradwinkel von $\psi = 0°$, sich befindet, wird der Führer des Kraftfahrzeugs zumindest aufgefordert, das Lenkrad in diese Geradausstellung zu bringen, um nachfolgend zurückzufahren. Erreicht der Abstand zur hinteren Begrenzung den Schwellwert $d_{min}$, mit dem Bezugszeichen 19 versehen, so wird der Fahrer zum Anhalten aufgefordert.

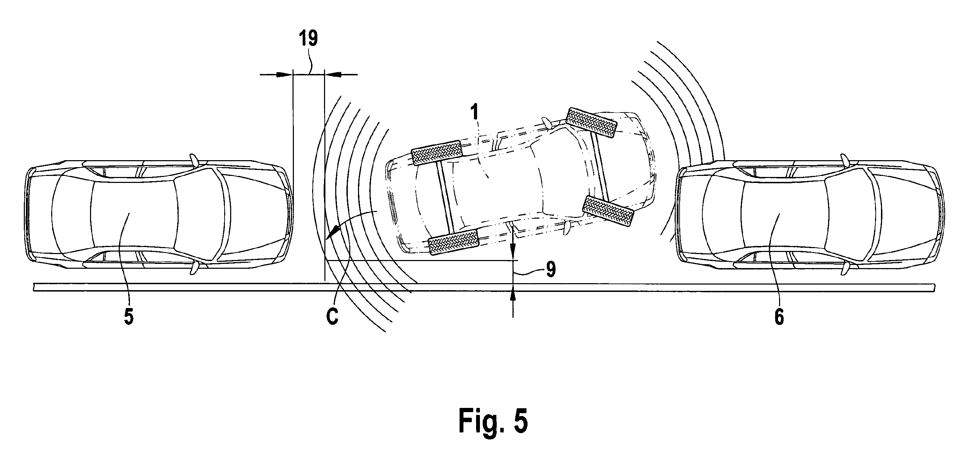

Bei der Wahl der zweiten Alternative, nämlich dass ein Volleinschlag des Lenkrades, und damit der Vorderräder nach rechts durchgeführt wird, wird der Fahrer zunächst aufgefordert, das Lenkrad vorne nach rechts einzuschlagen, bevor er dann angewiesen wird, zurückzufahren. So kann ein hinteres Fahrzeug 5 und/oder der Bordstein als Begrenzung des Rückwärtszugs wirken. Daher muss stets sowohl der Abstand zwischen dem eigenen Fahrzeug und dem hinteren Begrenzungsobjekt, also auch der Abstand zum hinteren rechten Rad zur seitlichen Begrenzung 7 bestimmt und überwacht werden. Wenn der Abstand zur hinteren Begrenzung den Schwellwert $d_{min}$ oder der zum Bordstein den Schwellwert $d_{min,lat}$, erreicht, wird der Fahrer zum Anhalten aufgefordert. Diese Ausführung entspricht in etwa der schematischen Abbildung in Figur 5.

Mit den in Abbildung der Figur 8 bezeichneten Größen berechnet sich der Abstand zur hinteren Begrenzung dabei durch

$$d_{min} < d_{Rear} = L - x_1 + x - l_h \cos(\psi) - b_h |\sin(\psi)|.$$

Der seitliche Abstand zum Bordstein wird berechnet durch

$$d_{min,lat} < d_{lat} = T - y_1 + y - b_h \cos(\psi) - r_{Wheel} |\sin(\psi)|.$$

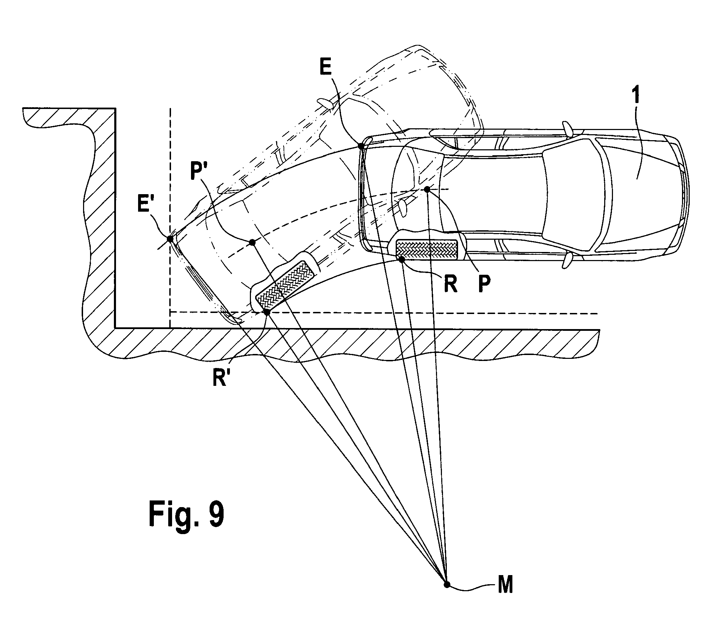

In der erläuterten dritten Alternative wird idealerweise der erste Rückwärtszug mit einem Lenkwinkel durchgeführt, der dazu führt, dass am Ende des Rückwärtszuges, sowohl der Abstand zum hinteren Objekt, als auch der Abstand zum Bordstein gerade den jeweiligen Schwellwert erreicht. Siehe diesbezüglich Figuren 8 und 9. Dieser ideale Lenkwinkel $LW_{ideal}$ wird wie folgt bestimmt.

Bei den geringen Geschwindigkeiten beim Ausparken kann Schlupf an den Reifen vernachlässigt werden. Daher kann zur Bewegungsbeschreibung von einem Einspur-/Ackermann-Modell ausgegangen werden. Bei konstantem Lenkradwinkel bewegt sich der linke hintere Eckpunkt E, der Mittelpunkt P der Hinterachse des Fahrzeugs und der gedachte hintere rechte Eckpunkt des rechten Hinterrades auf Kreisbahnen, um den selben Mittelpunkt M. Die Radien der Kreisbahnen hängen nur vom Lenkwinkel und der Fahrzeugsymmetrie ab:

$$r = \overline{MP} = \frac{l_{Achs}}{\tan(LW_{ideal})}$$

$$r_E = \overline{ME} = \sqrt{(r - b_h)^2 + l_h^2}$$

$$r_R = \overline{MR} = \sqrt{(r - b_h)^2 + r_{Wheel}^2}$$

In Figur 8 ist zwischen einer Vorderachse und einer Hinterachse als $l_{Achs}$ der Achsabstand 21 gekennzeichnet. In Figur 8 ist auch der ideale Lenkwinkel $LW_{ideal}$ mit dem Bezugszeichen 22 vermerkt.

Die Punkte E und R bewegen sich auf einer Kreisbahn um den außen liegenden Punkt M. Diese Situation ist in Figur 9 dargestellt. Die zwei Kreise sind durch folgende Kreisgleichungen beschrieben:

$$(x_E - x_M)^2 + (y_E - y_M)^2 = r_E^2$$

$$(x_R - x_M)^2 + (y_R - y_M)^2 = r_R^2$$

Die Koordinaten des Kreismittelpunktes M sind $x_M$ und $y_M$. Die Koordinaten der Kreisbahnpunkte der hinteren linken Fahrzeugecke sind $x_E$ und $y_E$. Die Koordinaten der Kreisbahn mit gedachten Radpunkten sind $x_R$ und $y_R$.

Durch Schnitt des Kreises auf dem der Punkt E liegt mit der gedachten Hilfsebene 18 mit dem Abstand $d_{min}$ zur hinteren Begrenzung, gemäß $x_E = x_2 + d_{min}$, ergibt sich die Position des zu einem zeitlich späteren Zeitpunkt an dieser Stelle befindlichen Punkt E'. Durch Schnitt des Kreises, auf dem sich der Punkt R befindet, mit der Hilfsebene 18 gemäß $y_R = y_1 - T + d_{min,lat}$, ergibt sich der Standort des Punktes R zu einem zeitlich späteren Zeitpunkt an der Stelle R';

Außerdem ist zwischen dem Kreismittelpunkt M und dem Mittelpunkt der Hinterachse und der aktuellen Fahrzeugposition (x,y) der Winkel $\psi$, der auch als Gierwinkel bezeichnet wird, vermerkt. Für diesen gilt:

$$x_M = x - r \sin(\psi)$$

und

$$y_M = y - r \cos(\psi)$$

Die Punkte E' und R' haben einen stets konstanten Abstand zueinander:

$$(x_E - x_R)^2 + (y_E - y_R)^2 = (2d_h)^2 + (l_h - r_{Wheel})^2$$

Mit den vorstehenden Gleichungen stehen nun 10 Gleichungen mit zehn Unbekannten zur Verfügung, womit sich der ideale Radius r bzw. der ideale Lenkwinkel $LW_{ideal}$ bestimmen lässt.

Im Falle, dass es sich bei der seitlichen Begrenzung 7 nicht um einen Bordstein handelt, sondern um eine Wand oder eine Mauer, die nicht mit dem Fahrzeugheck überstrichen werden kann, ist nicht mehr der gedachte Punkt R vom rechten Hinterrad, sondern die rechte hintere Fahrzeugecke relevant, so dass die vorher bezeichnete Gleichung

$$r_R = \overline{MR} = \sqrt{(r - b_h)^2 + r_{Wheel}^2} \quad \text{durch} \quad r_R = \overline{MR} = \sqrt{(r - b_h)^2 + l_h^2} \quad \text{ersetzt werden muss. Also nach-}$$

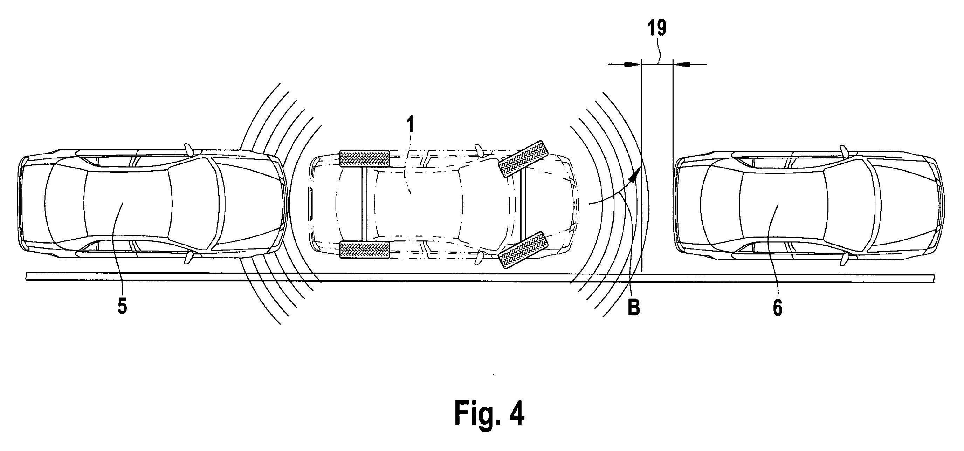

dem der Führer des Kraftfahrzeuges 1 entsprechend den genannten Alternativen in der Parklücke nach hinten geführt wird und dort zum Anhalten aufgefordert wird, wird er angewiesen, das Lenkrad voll nach links einzuschlagen und nach vorne zu fahren, wie in Figur 4 dargestellt. Dabei wird auch ein Abstand 19, also der Abstand $d_{min}$ zum vorderen Hindernis, wie etwa dem vorderen Fahrzeug 6 eingehalten. Erreicht der Abstand zwischen dem eigenen Kraftfahrzeug 1 und der vorderen Begrenzung den Schwellwert $d_{min}$, wird der Fahrer zum Anhalten aufgefordert. Anschließend folgt die Aufforderung für einen Volleinschlag des Lenkrades nach rechts, um dann gemäß Figur 5 nun in entgegengesetzter Richtung des Pfeiles B gemäß Figur 4 in Richtung des Pfeiles C in Figur 5 nach hinten zu fahren. Das Zurückrangieren erfolgt bis der Schwellwert $d_{min,lat}$ bzgl. des seitlichen Abstandes oder der Schwellwert $d_{min}$ bzgl. des hinteren Abstandes erreicht wird.

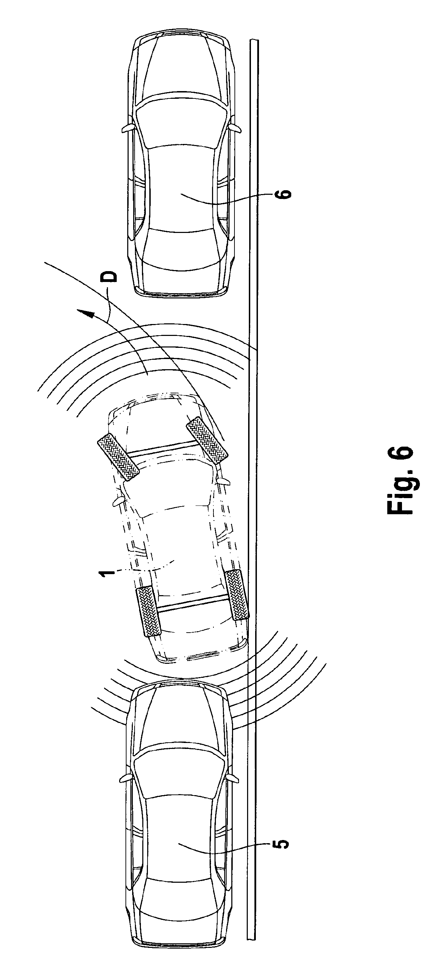

Dieses Vorwärts-/Rückwärtsrangieren wird so lange wiederholt, bis die vordere rechte Fahrzeugecke an der Parklückenecke ohne Kollision vorbeischeren kann, wie in Figur 6 dargestellt ist. Das Fahrzeug schlägt dabei die Richtung des Pfeiles D ein.

Es ist dann besonders vorteilhaft, wenn der mindestens erforderliche Lenkwinkel $LW_{min}$ dabei berechnet wird. Er ergibt sich aus den folgenden Gleichungen.

Der Mittelpunkt $(x_m, y_m)$ der Kreisbahn mit dem Radius $r_{max}$ hängt von der aktuellen Fahrzeugposition $(x,y)$ und dem Winkel $\psi$ ab.

$$x_m = x - r_{max} \sin(\psi)$$

$$y_m = y + r_{max} \cos(\psi)$$

Die vordere Fahrzeugecke beschreibt ebenfalls eine Kreisbahn $(r_v)$ um denselben Mittelpunkt. Für den Radius $r_v$ gilt: $r_v = \sqrt{(r_{max} + b_h)^2 + l_v^2}$ .

Um die Rundungen der Ecken des Kraftfahrzeugs 1 zu berücksichtigen, ist es vorteilhaft, wenn statt des Schwellwertes $d_{min}$ ein separater Sicherheitsabstand $d_S$ verwendet wird. Dabei variiert $d_S$ von $d_{min}$. Der minimale Abstand zwischen Fahrzeug und der entsprechenden Ecke des Hindernisses entspricht dann dem einzuhaltenden Sicherheitsabstand $d_S$. D.h. der Mittelpunkt $(x_m, y_m)$ liegt außerdem auf einem Kreis um die passende Ecke mit dem Radius $r_V + d_S$:

$$(x_m - x_1)^2 + (y_m - y_1)^2 = (r_v + d_S)^2$$

Mit den vorhergehenden vier Gleichungen ist daraus $r_{max}$ bestimmbar, wenn das Fahrzeug genau mit dem Sicherheitsabstand $d_S$ an der Ecke vorbeifährt. Der entsprechende, mindestens einzustellende Lenkwinkel ergibt sich

dann aus $\tan(LW_{min}) = \dfrac{l_{Achs}}{r_{max}}$ wobei der Volleinschlag als Einschränkung berücksichtigt werden muss.

Beim letzten Vorwärtszug, der das Fahrzeug an der vorderen Parklücke vorbeiführt, wird der Fahrer aufgefordert, einen Lenkwinkel anzugeben, der zwischen dem eben bestimmten Minimum und dem maximal möglichen Lenkwinkel, also dem Volleinschlag, liegt.

Um dem menschlichen Verhalten des Fahrers gerecht zu werden und das System robust zu gestalten, kann bei der Stopp-Aufforderung der voraussichtliche Bremsweg, bei dessen Abschätzung einer Reaktionszeit und einer Bremsverzögerung angenommen und die aktuelle Fahrzeuggeschwindigkeit hinzugezogen wird, berücksichtigt werden:

$$s_{Brems} = |v|\, t_{Reaktion} + \frac{v^2}{2a_{Verzögerung}} \ .$$

Somit wird der Fahrer entsprechend früher auf den Stopp hingewiesen, um rechtzeitig reagieren zu können.

Bisher wurde der Einparkvorgang für eine Parklücke auf der rechten Straßenseite betrachtet. Mit entsprechenden Anpassungen des oben beschriebenen Verfahrens, lässt sich auch ein Ausparkvorgang aus einer Parklücke auf der linken Seite der Straße unterstützen.

Unter Nutzung des erfindungsgemäßen Verfahrens ist es auch von Vorteil, wenn ein Assistenzsystem das Lenken losgelöst von den Eingaben des Fahrzeugführers durchführt. In diesem Fall nimmt der Fahrer die Hände vom Lenkrad. Das Ausparken steuert die Lenkbewegung und übernimmt damit die Führung des Fahrzeugs. Dem Fahrer werden lediglich Fahrhinweise entsprechend "vorwärts", "rückwärts" und/oder "stopp" gegeben.

Um eine automatische Lenkung nur auf das Ausparken zu beschränken ist es sinnvoll, am Anfang des letzten Zuges, wie er in Figur 6 dargestellt ist, einen geeigneten Lenkwinkel automatisch einzustellen und dann die Lenkverantwortung wieder dem Fahrer zu übergeben. Während dem letzten Vorwärtszug und beim Verlassen der Parklücke hat also der Fahrer die Kontrolle über die Lenkung und die Verantwortung für das Kraftfahrzeug.

Eine Erweiterung auf automatische Lenkführung ist ebenfalls besonders vorteilhaft, da dann sogar unter Ausschaltung der Notwendigkeit des Bedienens des Fahrers von Brems- und Gaspedal das Kraftfahrzeug automatisch aus der Parklücke geführt wird. Dazu wird eine Koppelung der Vorrichtung der Bremsanlage und/oder die Getriebe- und Motorsteuerung notwendig. Entsprechend errechneter Stopp-Punkte müssen dann Verzögerung und Beschleunigung geregelt werden.

**Patentansprüche**

1. Verfahren zum Unterstützen von Ausparkvorgängen von Kraftfahrzeugen, wobei Daten unterschiedlicher Bordsensoren (4) für die Ermittlung eines kollisionsfreien Ausparkvorganges benutzt werden, mit den Schritten:

   a) Ermittlung von Sensordaten beim Einparken zum Modellieren der physikalischen Umgebung des Kraftfahrzeuges (1),
   b) Berechnung von Daten zum Beschreiben der Umgebung,
   c) Abspeichern der Daten,
   d) Abrufen der gespeicherten Daten zum Ermitteln der für das Ausparken relevanten physikalischen Umgebung des Kraftfahrzeugs (1), **gekennzeichnet durch** die weiteren Schritte
   e) Überprüfung der gespeicherten Daten auf Plausibilität,
   f) Freigeben der Daten und
   g) Verwenden der Daten zum Berechnen eines kollisionsfreien Ausparkweges.

2. Verfahren nach Anspruch 1, wobei das Überprüfen der gespeicherten Daten auf Plausibilität den Schritt des Prüfens auf Vorliegen von eine seitliche Begrenzung (7), wie einen Bordstein, beschreibenden Daten umfasst.

3. Verfahren nach Anspruch 2, wobei bei Fehlen der eine seitliche Begrenzung (7) beschreibenden Daten für die weitere Berechnung von einer parallelen Ausrichtung des Kraftfahrzeugs (1) mit einem festgelegten Abstand, der vorzugsweise auf 20 cm gesetzt wird, ausgegangen wird.

**4.** Verfahren nach Anspruch 1, 2 oder 3, wobei der Schritt des Prüfens der gespeicherten Daten auch das Erfassen von aktuellen Abstandsdaten über die Bordsensoren (4) zu einem vorderen und/oder hinteren Hindernis (5, 6) beinhaltet und den Vergleich der erfassten Daten mit den jeweiligen gespeicherten Daten beinhaltet.

**5.** Verfahren nach Anspruch 4, wobei bei Abweichung der gespeicherten Daten um mehr als einen bestimmten Betrag ($d_{tol}$) die die Abmessungen des vorderen und/oder hinteren Hindernis modellierenden Daten durch Ersatzwerte ersetzt werden.

**6.** Verfahren nach Anspruch 5, wobei die gespeicherten Daten für das vordere und/oder hintere Hindernis durch die neu erfassten Daten ersetzt werden und/oder die die seitliche Erstreckung des vorderen und/oder hinteren Hindernisses beschreibenden Daten durch vorgegebene Daten ersetzt werden, die vorzugsweise ein Erstrecken des Hindernisses mit derselben Breite wie des ausparkenden Kraftfahrzeuges (1) modellieren.

**7.** Verfahren nach einem der Ansprüche 1 bis 6, wobei ein idealer Lenkradwinkel ($LW_{ideal}$) für ein erstmaliges Zurückfahren des Kraftfahrzeugs (1) ermittelt wird, so dass eine hintere der seitlichen Begrenzung ferne Ecke (E) mit einer ersten gedachten Ebene (17) in Kontakt gerät und ein hinterer Punkt des Kraftfahrzeugs (1) auf der der seitlichen Begrenzung (7) zugewandten Seite des Kraftfahrzeugs (1) gleichzeitig mit einer zweiten gedachten Ebene (18) in Kontakt gerät, wobei die erste gedachte Ebene (17) eine zur seitlichen Begrenzung orthogonale Vertikalebene (17) ist, die um einen Mindestabstand (19) von einem hinteren Hindernis (5) entfernt ist und wobei die zweite Ebene eine zur seitlichen Begrenzung (7) parallele und mit einem lateralen Mindestabstand (9) beabstandete Vertikalebene (18) ist.

**8.** Verfahren nach Anspruch 7, wobei der hintere Punkt entweder eine hintere Ecke (F) des Fahrzeugs ist, die der seitlichen Begrenzung (7) nächstgelegen ist, wenn die Höhe der seitlichen Begrenzung vom Heck des Kraftfahrzeugs (1) nicht ohne dessen Kontaktierung überstreichbar ist, oder ein Punkt (R) auf dem zuerst mit der seitlichen Begrenzung (7) in Kontakt gelangenden Reifen ist, wenn die Höhe der seitlichen Begrenzung (7) vom Heck des Kraftfahrzeugs (1) ohne dessen Kontaktierung überstreichbar ist.

**9.** Verfahren nach einem der Ansprüche 1-8, wobei ein minimaler Lenkwinkel ($LW_{min}$), für den das Kraftfahrzeug (1) aus der Parklücke ohne Kontaktierung des vorderen Hindernisses (6) führenden letzten Rangierschritt berechnet wird, wobei vorzugsweise der minimale Lenkwinkel automatisch eingestellt wird und danach die Kontrolle über das Fahrzeug einem Führer des Kraftfahrzeuges wieder zurückgegeben wird.

**10.** Vorrichtung zum Durchführen des Verfahrens nach einem der Ansprüche 1-9.

**Claims**

**1.** Method for assisting processes of leaving parking spaces of motor vehicles, wherein data from different on-board sensors (4) is used for determining a collision-free process of leaving a parking space, having the steps:

a) determining sensor data when entering the parking space in order to model the physical surroundings of the motor vehicle (1),
b) calculating data for describing the surroundings,
c) storing the data,
d) retrieving the stored data in order to determine the physical surroundings of the motor vehicle (1) which are relevant for the process of leaving the parking space, **characterized by** the further steps:
e) checking the stored data for plausibility,
f) releasing the data, and
g) using the data to calculate a collision-free path for leaving the parking space.

**2.** Method according to Claim 1, wherein the checking of the stored data for plausibility comprises the step of checking for the presence of data which describes a lateral boundary (7) such as a kerbstone.

**3.** Method according to Claim 2, wherein if the data describing a lateral boundary (7) is absent, a parallel orientation of the motor vehicle (1) at a defined distance, preferably set to 20 cm, is assumed for the further calculation.

**4.** Method according to Claim 1, 2 or 3, wherein the step of checking the stored data also includes acquiring current distance data relating to a front and/or rear obstacle (5, 6) by means of the on-board sensors (4), and comparing the acquired data with the respective stored data.

5. Method according to Claim 4, wherein if the stored data deviates by more than a specific absolute value ($d_{tol}$), the data which models the dimensions of the front and/or rear obstacle is replaced by substitute values.

6. Method according to Claim 5, wherein the stored data for the front and/or rear obstacle is replaced by the newly acquired data and/or the data describing the lateral extent of the front and/or rear obstacle is replaced by predefined data which preferably models an extent of the obstacle with the same width as the motor vehicle (1) which is leaving the parking space.

7. Method according to one of Claims 1 to 6, wherein an ideal steering wheel angle ($LW_{ideal}$) for a first backward movement of the motor vehicle (1) is determined, with the result that a rear corner (E) which is distant from the lateral boundary enters into contact with a first virtual plane (17), and a rear point of the motor vehicle (1) on the side of the motor vehicle (1) facing the lateral boundary (7) enters into contact simultaneously with a second virtual plane (18), wherein the first virtual plane (17) is a vertical plane (17) which is orthogonal with respect to the lateral boundary and which is at a minimum distance (19) from a rear obstacle (5), and wherein the second plane is a vertical plane (18) which is parallel to the lateral boundary (7) and is at a minimum lateral distance (9).

8. Method according to Claim 7, wherein the rear point is either a rear corner (F) of the vehicle which is closest to the lateral boundary (7) if the rear of the motor vehicle (1) cannot pass over the height of the lateral boundary without entering into contact therewith, or a point (R) on the tyre which first enters into contact with the lateral boundary (7) if the rear of the motor vehicle (1) can pass over the height of the lateral boundary (7) without entering into contact therewith.

9. Method according to one of Claims 1-8, wherein a minimum steering angle ($LW_{min}$) for the last manoeuvring step which moves the motor vehicle (1) out of the parking space without contact with the front obstacle (6) is calculated, wherein the minimum steering angle is preferably set automatically and the control of the vehicle is subsequently returned again to a driver of the motor vehicle.

10. Device for carrying out the method according to one of Claims 1-9.

**Revendications**

1. Procédé d'assistance aux opérations de sortie de stationnement de véhicules automobiles, dans lequel des données de différents détecteurs de bord (4) sont utilisées pour définir une opération de sortie de stationnement sans collision, le procédé comportant les étapes suivantes :

   a) saisie des données de détecteurs lors du stationnement, pour modéliser l'environnement physique du véhicule automobile (1),
   b) calcul des données en vue de décrire l'environnement,
   c) conservation des données en mémoire,
   d) appel des données conservées en mémoire pour déterminer l'environnement physique du véhicule automobile (1) pertinent pour l'opération de sortie de stationnement,

   **caractérisé par** les étapes supplémentaires qui consistent à :

   e) vérifier la plausibilité des données conservées en mémoire,
   f) délivrer les données et
   g) utiliser les données pour calculer une trajectoire de sortie de stationnement sans collision.

2. Procédé selon la revendication 1, dans lequel la vérification de la plausibilité des données conservées en mémoire comporte l'étape qui consiste à vérifier s'il existe des données qui décrivent une limite latérale (7), par exemple un seuil de trottoir.

3. Procédé selon la revendication 2, dans lequel en cas d'absence de données décrivant une limite latérale (7), la poursuite du calcul part de l'hypothèse que le véhicule automobile (1) est orienté parallèlement à une distance définie qui est de préférence fixée à 20 cm.

4. Procédé selon les revendications 1, 2 ou 3, dans lequel l'étape de vérification des données conservées en mémoire comporte également la saisie par les détecteurs de bord (4) de données actualisées de distance par rapport à un obstacle avant et/ou à un obstacle arrière (5, 6) et comporte la comparaison des données saisies aux données conservées en mémoire.

5. Procédé selon la revendication 4, dans lequel au cas où les données conservées en mémoire présentent un écart supérieur à un niveau défini ($d_{tol}$), les données qui modélisent les dimensions de l'obstacle avant et/ou de l'obstacle arrière sont remplacées par des valeurs de remplacement.

6. Procédé selon la revendication 5, dans lequel les données conservées en mémoire pour l'obstacle avant et/ou l'obstacle arrière sont remplacées par des données nouvellement saisies et/ou les données qui décrivent l'extension latérale de l'obstacle avant et/ou de l'obstacle arrière sont remplacées par des données prédéterminées qui modélisent de préférence une extension de l'obstacle sur une largeur identique à celle du véhicule automobile (1) qui doit sortir de stationnement.

7. Procédé selon l'une des revendications 1 à 6, dans lequel un angle de volant idéal ($LW_{ideal}$) est déterminé pour un premier recul du véhicule automobile (1) de telle sorte qu'un coin arrière (E) éloigné de l'obstacle latéral entre en contact avec un premier plan imaginaire (17) et qu'un point arrière du véhicule automobile (1), situé sur le côté du véhicule automobile (1) tourné vers la limite latérale (7), soit en même temps en contact avec un deuxième plan imaginaire (18), le premier plan imaginaire (17) étant un plan vertical (17) perpendiculaire à la limite latérale et distant de l'obstacle arrière (5) d'une distance minimale (19), le deuxième plan étant un plan vertical (18) parallèle à la limite latérale (7) et situé à une distance latérale minimale (9).

8. Procédé selon la revendication 7, dans lequel le point arrière est soit un coin arrière (F) du véhicule automobile situé le plus proche de la limite latérale (7) lorsque la hauteur de la limite latérale ne peut être balayée sans contact par l'arrière du véhicule automobile (1) ou le point (R) du bandage de roue qui entre le premier en contact avec la limite latérale (7) lorsque la hauteur de la limite latérale (7) peut être balayée par l'arrière du véhicule automobile (1) sans entrer en contact avec lui.

9. Procédé selon l'une des revendications 1 à 8, dans lequel un angle de direction minimum ($LW_{min}$) est calculé pour la dernière étape de stationnement qui conduit le véhicule automobile (1) hors de l'emplacement de stationnement sans contact avec l'obstacle avant (6) est calculé, l'angle de direction minimum étant établi automatiquement et le contrôle du véhicule étant ensuite renvoyé au conducteur du véhicule automobile.

10. Dispositif en vue de l'exécution du procédé selon l'une des revendications 1 à 9.

Fig. 1

Fig. 2

Fig. 3

Fig. 4

**Fig. 5**

Fig. 6

## Fig. 7

Fig. 8

EP 2 183 140 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1270367 A2
- DE 19940007 A1
- DE 19933732 A1
- DE 102004046631 A1
- DE 4333112 A1
- DE 10331948 A1